# EUROPEAN PATENT APPLICATION

(11) **EP 4 656 436 A1**
(43) Date of publication of application: **03.12.2025**
(21) Application number: 24220832.0
(22) Date of filing: 17.12.2024
(51) Int. Cl.: B60K 35/21, B60K 35/215, B60K 35/22, B60K 35/28, B60R 1/00

(54) **AUTOMOTIVE DISPLAY DEVICE WITH DIRECTION ALERT FUNCTION AND DRIVER ASSISTANCE SYSTEM INCLUDING THE SAME**

(30) Priority: 31.05.2024 TW 113120481
(71) Applicant: Autoequips Tech Co., Ltd., New Taipei City 23557 (TW)
(72) Inventor: Wang, Ting-Peng, 23557 New Taipei City (TW)
(74) Representative: Lang, Christian

(57) **Abstract**

An automotive display device with a direction alert function and a driver assistance system including the same essentially include the main body of the automotive display device. The main body includes a display screen on the front side and a direction alert module provided around, and along the periphery of, the display screen and including light-emitting units for emitting alerting light from an area located along the periphery, and in an appropriate direction, of the display screen. When the driver assistance system determines to issue an early warning, the display screen displays an image, or information, of an object approaching the vehicle body, and the direction alert module works according to the direction of the approaching object with respect to the vehicle body in order for the light-emitting unit(s) in an area located along the periphery, and in a corresponding direction, of the display screen to emit the alerting light.

## Description

### BACKGROUND OF THE INVENTION

### 1. Technical Field

The present invention relates to an automotive display device. More particularly, the invention relates to an automotive display device with a direction alert function and a driver assistance system including the same.

### 2. Description of Related Art

With the development of technology, the market has been supplied with a variety of Around View Monitor (AVM) systems suitable for use in vehicles, and these systems can be further integrated with other devices to form Advanced Driver Assistance Systems (ADAS), which can help drivers see their blind spots while driving, and which can even make automatic judgements and issue early warnings to compel drivers' attention or vigilance so as to prevent accidents.

In reality, however, car accidents attributable to drivers' blind spots still abound, and this is especially true of buses, large trucks, dump trucks, container trucks, semi-trailer trucks, and other large vehicles not only because their relatively high driver seats and relatively great vehicle lengths result in a relatively large number of blind spots on the sides and at the back, but also because of their relatively long wheelbases and relatively large radii of gyration, not to mention the radius differences between inner wheels. Furthermore, in addition to paying attention to the traffic and road condition ahead (including turning vehicles, turns of roads, signal lights of vehicles, and traffic lights, among others), a modern driver may have to check, from time to time, a number of monitor screens showing images of blind spots, the conditions of passengers if any, and the load on the vehicle (e.g., cold-chain, special, or dangerous goods) and therefore can be too busy to notice any change taking place in the vicinity of the vehicle; that is to say, the driver may not have the time or ability to detect an approaching object and keep the vehicle away from it or decelerate or brake the vehicle. This is a major reason why the current laws and regulations that demand the installation of cameras or active detection equipment still fail to reduce the occurrence of car accidents effectively.

In view of the above, the inventor of the present invention strived to find ways of improvement and, after repeated trials and continued efforts, finally succeeded in developing the invention disclosed herein.

### BRIEF SUMMARY OF THE INVENTION

The primary objective of the present invention is provide an automotive display device that has a direction alert function whereby alerting light is emitted from an area located along the periphery of a display screen to provide an alert for the direction of an approaching object, so that a driver only has to use their peripheral vision to be aware of the direction in which the object triggering the early warning is approaching. The automotive display device, therefore, will not add to the load on the driver (i.e., will not require the driver to direct their line of sight, which is supposed to be focused on the traffic and road condition ahead, entirely to the display screen) while enabling the driver to have sufficient time to react to an early warning-triggering condition and thereby avoid accidents.

To achieve the foregoing objective and effect, the present invention provides an automotive display device that has a direction alert function, that is applied mainly to a driver assistance system, and that includes a main body whose front side is provided with a display screen for displaying an image or information in collaboration with the driver assistance system. The technical means and structural features adopted by the automotive display device are as follows. The main body further includes a direction alert module provided around, and along the periphery of, the display screen and configured for emitting alerting light from an area located along the periphery, and in an appropriate direction, of the display screen. The direction alert module at least includes a plurality of light-emitting units, and the light-emitting units are provided around, and arranged at intervals along the periphery of, the display screen. The driver assistance system can identify an approaching object in the vicinity of the vehicle body of the vehicle where the system is installed. The display screen is configured for displaying an image, or information, of the approaching object in collaboration with the driver assistance system, and the direction alert module is configured to be driven according to the direction of the approaching object with respect to the vehicle body in order for the light-emitting unit(s) in an area located along the periphery, and in a corresponding direction, of the display screen to emit the alerting light.

The foregoing structures may be so designed that the main body further includes a circuit substrate and a front housing located on the front side of the circuit substrate, that the display screen and the light-emitting units are mounted on the circuit substrate, and that the front housing is formed with a hollow portion corresponding in position to the display screen and a plurality of hollowed-out guide grooves corresponding in position to the light-emitting units. The hollow portion is configured for accommodating the display screen in such a way that the display screen is exposed on the front side of the main body. The guide grooves are provided around, and arranged at intervals along the periphery of, the hollow portion so that the alerting light of each light-emitting unit can be projected forward through the corresponding guide groove.

The foregoing structures may be so designed that the main body further includes a rear housing located on the rear side of the circuit substrate, that the rear housing is configured to couple with the front housing, and that the inner side of the rear housing is provided with a light-reflecting portion corresponding in position to the light-emitting units in order for the alerting light of the light-emitting units to be projected forward in a concentrated manner.

The foregoing structures may be so designed that the direction alert module further includes a plurality of light-guiding edge strips provided around, and along the periphery of, the display screen, and that the light-guiding edge strips are mounted on the guide grooves of the front housing, cover the side of the guide grooves that is opposite the light-emitting units, and are configured for receiving and guiding the light coming through the guide grooves such that the light forms the alerting light emitted regionally from an area located along the periphery of the display screen.

The foregoing structures may be so designed that the direction alert module is provided with at least one light-guiding edge strip at each of a position above, a position below, a position to the left of, and a position to the right of the display screen, and that each of the light-guiding edge strips corresponds to at least one guide groove and at least one light-emitting unit in order to let out the alerting light when the approaching object is in front of, behind, on the left side of, or on the right side of the vehicle body.

The foregoing structures may be so designed that the main body further includes a loudspeaker located between the circuit substrate and the rear housing, electrically connected to the circuit substrate, and configured for producing an alerting sound when the direction alert module emits the alerting light, and that the rear housing is formed with a plurality of sound output holes corresponding in position to the loudspeaker.

The foregoing structures may be so designed that the rear housing is further provided with a supporting frame connection hole configured for connecting with a supporting frame assembly.

In one feasible embodiment, the display screen may be so designed that it has an elongated shape similar to the shape of the vehicle body, and the light-guiding edge strip at the position above or below the display screen and the corresponding at least one guide groove may be so designed that they are arcuate in shape in order for the automotive display device to have a smooth, rounded configuration. In addition, the alerting light emitted by the light-emitting units may be red light, yellow light, or blue light, all of which are known to be able to alert a driver easily, and the sound produced by the loudspeaker may be a multi-stage buzzing sound (e.g., beep-beep-beep, beep-beep, beep).

Another objective of the present invention is to provide a driver assistance system that has a direction alert function, that is applied mainly to a vehicle, and that is equipped with the foregoing automotive display device in order to form a driver assistance system that allows a driver to judge with their peripheral vision and therefore will not add to the load on the driver. The major technical means and system structure of the driver assistance system include the automotive display device, a plurality of photographic units, and a processing unit. The automotive display device is provided to be observed, i.e., seen or noticed, by the driver. The main components of the automotive display device have been described above and therefore will not be stated repeatedly. The photographic units are provided on the vehicle body of the vehicle to capture real-scene images of the surroundings of the vehicle body. The processing unit is in electrical-signal connection with the photographic units and the automotive display device and is configured for receiving and processing the real-scene images captured by the photographic units, making a judgement according to the processed real-scene images, and controlling the automotive display device according to the judgement made.

In the driver assistance system of the present invention, the processing unit at least includes an image processing module configured for image processing, an object identification module configured for identifying an object in an image, an early-warning determination module configured for determining, according to the distance to the identified object, whether or not an early warning should be issued, and a display control module configured for controlling the display screen according to the early warning to be issued. More specifically, when the distance between the identified object and the vehicle body is less than a preset alert distance, the early-warning determination module determines to issue the early warning and therefore drives the automotive display device according to the direction of the identified object with respect to the vehicle body in order for the light-emitting unit(s) in an area located along the periphery, and in a corresponding direction, of the display screen to emit the alerting light while the early warning is being issued, and the display control module controls the image or information displayed by the display screen of the automotive display device in such a way that, while the early warning is being issued, the display screen displays a real-scene image containing the identified object at a position corresponding to the direction of the identified object, a partial enlarged real-scene image showing the identified object at a position corresponding to the direction of the identified object, or an electronic icon capable of representing the identified object.

The foregoing system structure may be so designed that the processing unit further includes a path prediction module configured for tracking previous image data of the identified object, inferring the prior moving trail of the identified object from the previous image data, and estimating the moving path of the identified object in a predetermined period of time in the future according to the prior moving trail; that the early-warning determination module is configured for determining, according to the future moving path of the identified object, whether the early warning should be issued or not; and that the early-warning determination module determines to issue the early warning when the distance between the moving path of the identified object and the vehicle body is less than the alert distance.

Furthermore, the image processing module is configured for performing image stitching, projection, and warping conversions on the real-scene images and can at least generate a top-view panoramic image of the vehicle body by stitching conversion, the object identification module is configured for identifying in the real-scene images or the panoramic image of the vehicle body an object in the vicinity of the vehicle body, and the display control module is configured for driving the display screen to display the panoramic image of the vehicle body when no early warning is issued.

In the driver assistance system of the present invention, it is preferable that the alert distance preset in the early-warning determination module can be increased or decreased with the vehicle speed of the vehicle in order to provide an appropriate early warning that suits the driver's driving condition, thereby enabling the driver to respond to an emergency properly. In addition, the predetermined period of time preset in the path prediction module is preferably about 2 seconds so as to form a rather accurate prediction and early warning.

### BRIEF DESCRIPTION OF THE SEVERAL VIEWS OF THE DRAWINGS

The aforesaid objectives, features, and functional effects of the present invention can be better understood by referring to the following preferred embodiments in conjunction with the accompanying drawings, in which:
FIG. 1 is a perspective view of the automotive display device according to a preferred embodiment of the invention;
FIG. 2 is an exploded perspective view of the automotive display device in FIG. 1;
FIG. 3 is a block diagram showing the system structure of the driver assistance system according to another preferred embodiment of the invention;
FIG. 4 shows a state of use of the automotive display device in FIG. 1; more particularly, FIG. 4 shows the automotive display device issuing an early warning;
FIG. 5 shows the driver assistance system in FIG. 3 predicting a moving path;
FIG. 6 shows another state of use of the automotive display device in FIG. 1; more particularly, FIG. 6 shows the automotive display device issuing another early warning;
FIG. 7 shows the driver assistance system in FIG. 3 predicting another moving path; and
FIG. 8 shows yet another state of use of the automotive display device in FIG. 1; more particularly, FIG. 8 shows the automotive display device issuing yet another early warning.

### DETAILED DESCRIPTION OF THE INVENTION

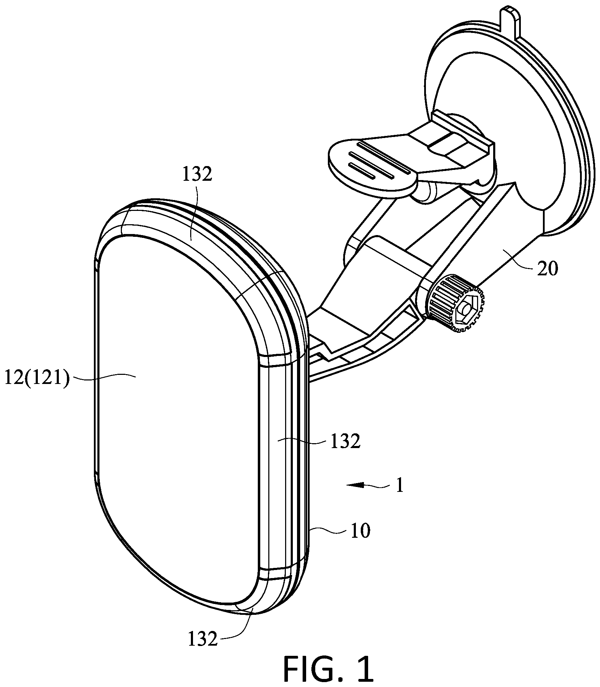

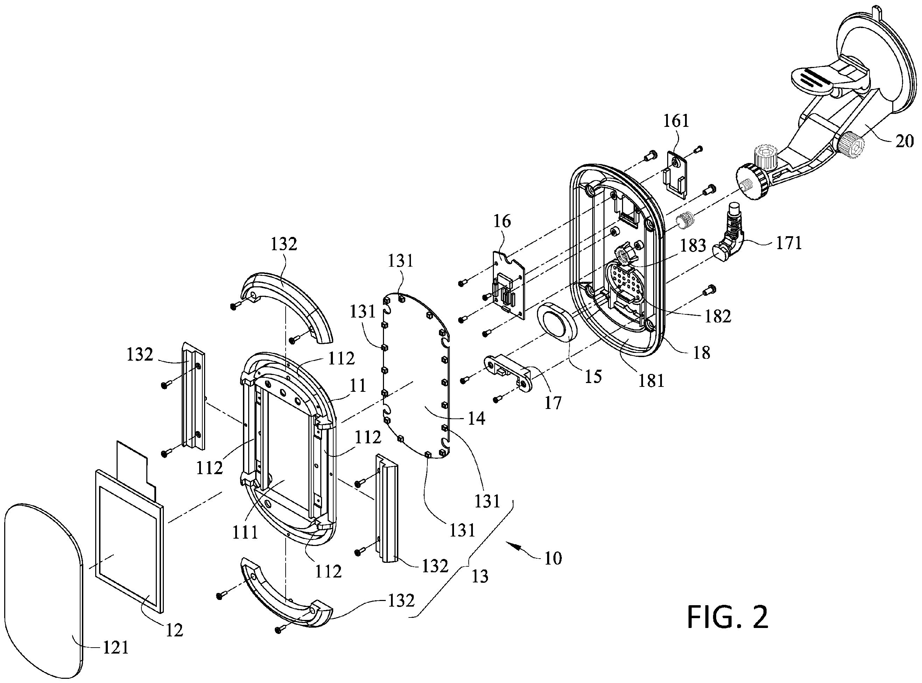

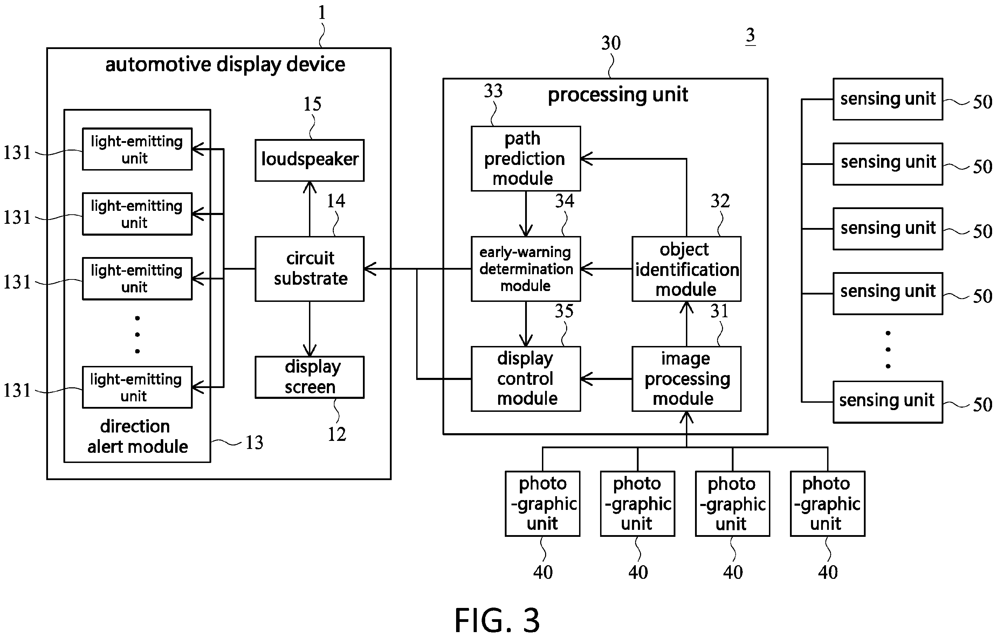

Referring to FIG. 1 to FIG. 3, the main technical contents of the present invention involve an automotive display device 1 having a direction alert function and a driver assistance system 3 having the automotive display device 1. The driver assistance system 3 is applied mainly to a vehicle and at least includes a processing unit 30 that is in electrical-signal connection with the automotive display device 1 and a plurality of photographic units 40 that are provided on the vehicle body 60 of the vehicle and configured to capture real-scene images of the surroundings of the vehicle body 60. The automotive display device 1 is typically provided at a position that is directly in front of, or is in front of and lateral to, the driver seat of the vehicle and that is visible with the driver's peripheral vision while the driver is driving the vehicle, the objective being to render the automotive display device 1 observable by the driver with their peripheral vision.

The automotive display device 1 has a main body 10 configured to be connected to a supporting frame assembly 20 and thereby allow the automotive display device 1 to be supported at an appropriate position in the vehicle. The main body 10 includes a front housing 11 and a rear housing 18 that can be coupled together in a mutually aligned manner so as to form therebetween a space for accommodating other elements.

In this embodiment, the main body 10 is provided with a circuit substrate 14 between the front housing 11 and the rear housing 18 and includes a display screen 12 provided on the circuit substrate 14 and a direction alert module 13. The display screen 12 is configured for displaying an appropriate image or appropriate information in collaboration with the driver assistance system 3, is disposed on the front side of the circuit substrate 14, and is accommodated in a hollow portion 111 formed in the front housing 11 at a corresponding position such that the display screen 12 is exposed on the front side of the main body 10. The direction alert module 13 is provided around, and along the periphery of, the display screen 12 and is configured mainly to emit alerting light, under the instruction of the driver assistance system 3, from an area that is located along the periphery, and in an appropriate direction, of the display screen 12. The direction alert module 13 at least includes a plurality of light-emitting units 131, and the light-emitting units 131 are provided around, and arranged at intervals along the periphery of, the display screen 12.

The processing unit 30 of the driver assistance system 3 is generally implemented by an electronic control unit (ECU) designed specifically for vehicles, is in electrical-signal connection with the photographic units 40 and the automotive display device 1 separately, and is configured for receiving the real-scene images captured by the photographic units 40, performing necessary image processing, analysis, and computation on the real-scene images, judging by preset criteria, and outputting a signal for controlling the automotive display device 1. The processing unit 30 may be equipped with a plurality of function modules to meet practical needs. In this example, the processing unit 30 is provided with an image processing module 31, an object identification module 32, a path prediction module 33, an early-warning determination module 34, and a display control module 35.

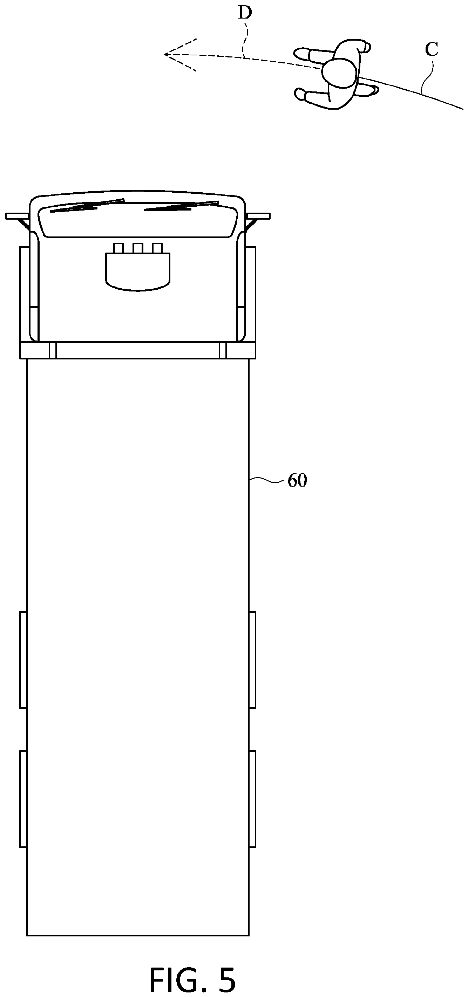

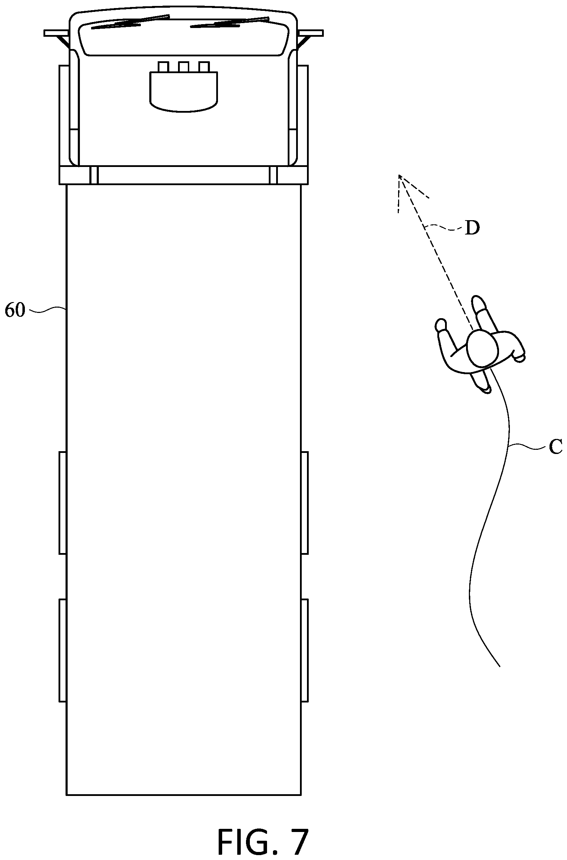

The image processing module 31 is configured to perform such image processing operations as image stitching, projection, and warping conversions on the real-scene images and can at least generate a top-view panoramic image of the vehicle body 60 by stitching conversion. The object identification module 32 is configured to identity in the real-scene images or in an image processed by the image processing module 31 an object (e.g., a pedestrian, car, bicycle, or small animal) in the vicinity of the vehicle body 60. The path prediction module 33 is configured to track previous image data of the identified object, infer the prior moving trail C of the identified object from the previous image data, and estimate the moving path D of the identified object in a predetermined period of time in the future according to the prior moving trail C (see FIG. 5 or FIG. 7). Simply put, the estimation of the future moving path D is made by identifying the change in movement in each image, predicting the possible direction of movement in the next image, and connecting the predicted directions of movement to form a path. The early-warning determination module 34 is configured to determine, according to the distance to the identified object, whether or not an early warning should be issued. More specifically, an early warning will be issued when the distance between the identified object and the vehicle body 60 is less than a preset alert distance, and while the early warning is being issued, the automotive display device 1 will be driven according to the direction of the identified object with respect to the vehicle body 60 in order for the light-emitting unit(s) 131 in an area located along the periphery, and in a corresponding direction, of the display screen 12 to emit the alerting light. The display control module 35 is configured to control, according to the early warning to be issued, the image or information displayed by the display screen 12 of the automotive display device 1 so that while the early warning is being issued, the display screen 12 will display an image or information that is easily identifiable by the driver, such as a real-scene image containing the identified object at a position corresponding to the direction of the identified object, a partial enlarged real-scene image showing in particular the identified object at a position corresponding to the direction of the identified object, or an electronic icon capable of representing the identified object.

The processing unit 30 and the automotive display device 1 in the driver assistance system 3 work with each other so that the driver assistance system 3 can identify an approaching object in the vicinity of the vehicle body 60, track the approaching object, and determine whether or not to issue an early warning. When determining to issue the early warning, the driver assistance system 3 sends a signal to the display screen 12 of the automotive display device 1 and thereby drives the display screen 12 to display an image, or information, of the approaching object while the early warning is being issued, and the direction alert module 13 will be driven according to the direction of the approaching object with respect to the vehicle body 60 in order for the light-emitting unit(s) 131 in an area located along the periphery, and in a corresponding direction, of the display screen 12 to emit the alerting light.

In one feasible embodiment, the driver assistance system 3 may further include a plurality of sensing units 50 provided on the vehicle body 60 to sense an object in the vicinity of the vehicle body 60. In that case, the processing unit 30 will receive the sensing signals of the sensing units 50, compare the sensing result with the object identified by the object identification module 32, and perform a calibration operation, if necessary, in order to enable the driver assistance system 3 to identify or track an object in the vicinity of the vehicle body 60 more accurately.

In this embodiment, the light-emitting units 131 are mounted on the circuit substrate 14 and are arranged around, and along the periphery of, the display screen 12. The front housing 11 is formed with a plurality of hollowed-out guide grooves 112 corresponding in position to the light-emitting units 131. The guide grooves 112 are provided around, and arranged at intervals along the periphery of, the hollow portion 111 so that the alerting light of each light-emitting unit 131 can be projected forward through the corresponding guide groove 112. The alerting light emitted by the light-emitting units 131 is preferably red light, yellow light, or blue light.

The direction alert module 13 in this embodiment further includes a plurality of light-guiding edge strips 132 provided around, and along the periphery of, the display screen 12. Each light-guiding edge strip 132 is mounted on the corresponding guide groove 112 of the front housing 11, covers the side of the corresponding guide groove 112 that is opposite the corresponding light-emitting unit(s) 131, and is configured to receive and guide the light coming through the corresponding guide groove 112 such that the light forms the alerting light emitted regionally from an area located along the periphery of the display screen 12. The alerting light will not be projected directly into the driver's eyes, and this makes it easier for the driver to determine the direction of the approaching object with their peripheral vision.

Furthermore, the inner side of the rear housing 18 is provided with a light-reflecting portion 181 corresponding in position to the light-emitting units 131. In this embodiment, the light-reflecting portion 181 has a generally annular shape that matches the shape in which the light-emitting units 131 are arranged, in order for the alerting light of the light-emitting units 131 to be projected forward in a concentrated manner. Thus, when an early warning is issued, the alerting light emitted will be brighter and more noticeable than without the light-reflecting portion 181.

In this embodiment, the front side of the main body 10 is further provided with a piece of TP glass 121 for protecting the display screen 12, and the main body 10 is further provided therein with a loudspeaker 15, a memory card assembly 16, and a cable mount 17. The loudspeaker 15 and the memory card assembly 16 are electrically connected to the rear side of the circuit substrate 14 and are located between the circuit substrate 14 and the rear housing 18. The loudspeaker 15 is configured to produce an alerting sound when an early warning is being issued (i.e., when the direction alert module 13 emits the alerting light), wherein the alerting sound is output through a plurality of sound output holes 182 that are formed in the rear housing 18 at positions corresponding to the loudspeaker 15. The memory card assembly 16 forms an insertion groove together with a memory card securing cover 161 that is provided on the rear housing 18 and corresponds in position to the memory card assembly 16, wherein the insertion groove is configured to accommodate a memory card inserted therein and thereby allow the memory card to be added to the automotive display device 1. The cable mount 17 is configured to secure a bundle 171 of electrical cables of the circuit substrate 14. In addition, a central portion of the rear housing 18 may be provided with a supporting frame connection hole 183 for connecting with the supporting frame assembly 20.

In one feasible embodiment, the direction alert module 13 is provided with an appropriate number of light-guiding edge strips 132 each corresponding to an appropriate direction and is peripherally provided with an appropriate number of light-emitting units 131, wherein the term "appropriate" means being able to meet the requirements of the model of the vehicle. In this embodiment, the direction alert module 13 is provided with one light-guiding edge strip 132 at each of a position above, a position below, a position to the left of, and a positon to the right of the display screen 12, and each of the light-guiding edge strips 132 contributes to the issue of an early warning corresponding to one of the front side, the rear side, the left side, and the right side of the vehicle body 60 (i.e., contributes to the emission of the alerting light corresponding to an approaching object in front of, behind, on the left side of, or on the right side of the vehicle body 60). Furthermore, the light-guiding edge strip 132 above or below the display screen 12 and the corresponding guide groove 112 are arcuate in shape.

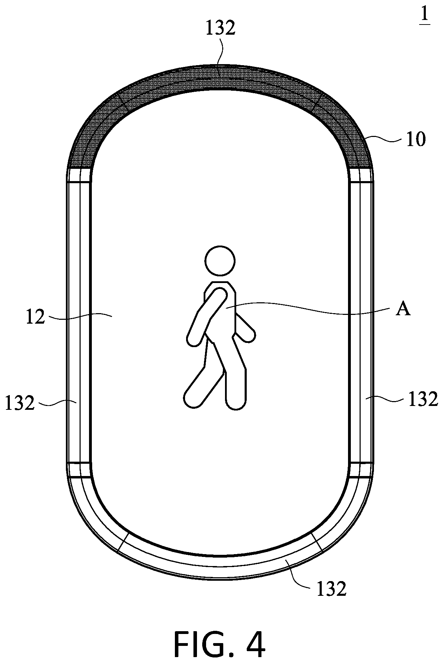

When this embodiment is put to use, referring FIG. 4 to FIG. 8, the driver assistance system 3 can use the object identification module 32 to identify an approaching object in the vicinity of the vehicle body 60, the path prediction module 33 to predict the future moving path D of the object based on the prior moving trail C, and the early-warning determination module 34 to track and determine whether the distance to the object or to its moving path D demands an early warning. When it is determined to issue the early warning, the driver assistance system 3 drives the automotive display device 1 to perform the related operations, i.e., to display an image, or information, of the approaching object on the display screen 12, and to act according to the direction of the approaching object with respect to the vehicle body 60 in order for the light-emitting unit(s) 131 in an area located along the periphery, and in a corresponding direction, of the display screen 12 to emit the alerting light, and consequently for the light-guiding edge strip 132 in the corresponding direction to be lit up and form a noticeable alerting light zone.

Referring to FIG. 4 and FIG. 5, when the early-warning determination module 34 determines that the distance to a pedestrian in front of the vehicle body 60 or to the moving path D of the pedestrian is less than the alert distance, the early-warning determination module 34 and the display control module 35 will jointly instruct the automotive display device 1 to perform the early warning-related operations, i.e., to display an image, or information, of the approaching obj ect on the display screen 12 (in this example, an electronic icon A of a walking pedestrian is displayed by the display screen 12 to make it easier for the driver to know the type of the approaching object by way of peripheral vision), and to make the light-emitting units 131 above the display screen 12 emit the alerting light, thereby lighting up the light-guiding edge strip 132 above the display screen 12 (see FIG. 4) and turning this light-guiding edge strip 132 into a noticeably lit alerting light zone so that the driver can easily determine, through peripheral vision, that there is an approaching object in front of the vehicle body 60. In consequence, the intended effect of providing direction alert is achieved.

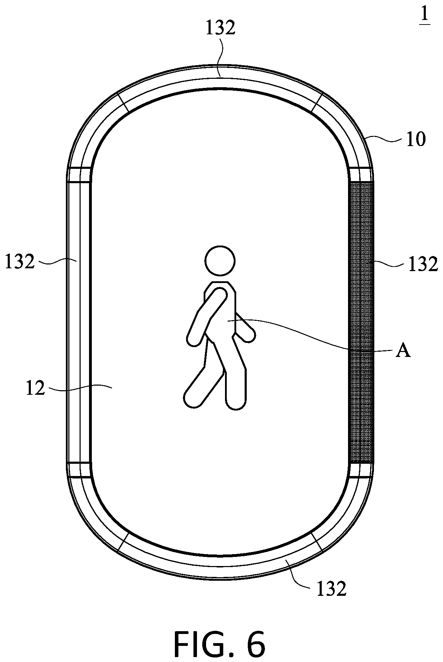

Referring to FIG. 6 and FIG. 7, when the early-warning determination module 34 determines that the distance to a pedestrian to the right of the vehicle body 60 or the distance to the moving path D of the pedestrian is less than the alert distance, the early-warning determination module 34 and the display control module 35 will jointly instruct the automotive display device 1 to perform the early warning-related operations, i.e., to display an image, or information, of the approaching obj ect on the display screen 12 (in this example, the electronic icon A of a walking pedestrian is displayed by the display screen 12 to make it easier for the driver to know the type of the approaching object by way of peripheral vision), and for direction alert, to make the light-emitting units 131 on the right side of the display screen 12 emit the alerting light, thereby lighting up the light-guiding edge strip 132 on the right side of the display screen 12 (see FIG. 6) and turning this light-guiding edge strip 132 into a noticeably lit alerting light zone so that the driver can easily determine, through peripheral vision, that there is an approaching object on the right side of the vehicle body 60. In consequence, the intended effect of providing direction alert is achieved.

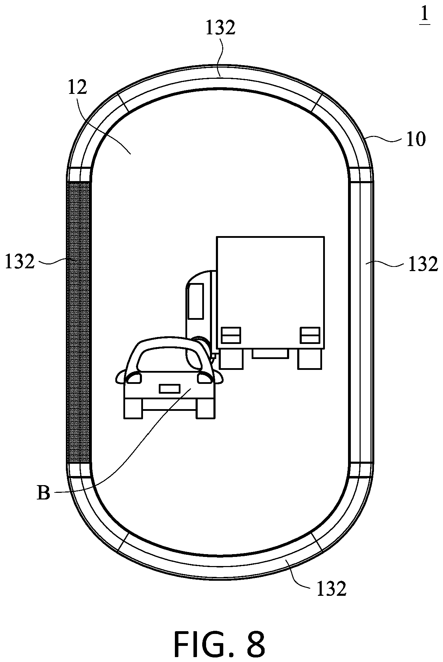

In other feasible embodiments, the display screen 12 may be used to display more images. For example, when no early warning is issued, the display control module 35 may instruct the display screen 12 to display the aforementioned top-view panoramic image of the vehicle body 60, and when an early warning is issued, the display screen 12 will be switched to displaying an image, or information, of the approaching object as the corresponding alerting light is emitted, wherein the image or information of the approaching object may be, for instance, an image cropped from a real-scene image, such as a real-scene image containing the object at a position corresponding to the direction of the object, a partial enlarged real-scene image showing in particular the object at a position corresponding to the direction of the object, or an electronic icon capable of representing the object (e.g., the electronic icon A of a walking pedestrian in FIG. 4 or FIG. 6, or the electronic icon B in FIG. 8 that shows a vehicle approaching from the left). Thus, the image or information displayed by the display screen 12 and the alerting light emitted noticeably from an area located along the periphery of the display screen 12 allow the driver to easily and rapidly determine, through peripheral vision, the type and direction of the approaching object and hence be able to better deal with the condition triggering the early warning and to thereby reduce the occurrence of accidents.

According to the above, the present invention provides an automotive display device having a direction alert function and a driver assistance system including the same, wherein the alerting light emitted noticeably from an area located along the periphery of the display screen 12 allows the direction in which the early warning-triggering condition takes place to be easily identified by the driver through peripheral vision. Thus, the invention is indeed capable of lightening the driver's load of having to divert their line of sight and can therefore reduce the occurrence of accidents. As the invention is novel and non-obvious, a patent application is hereby filed according to the law. It should be understood, however, that the contents disclosed herein are directed only to some preferred embodiments of the invention. Any variation, modification, change, or equivalent substitution that is derived from the technical means or concept of the invention shall fall within the scope of the appended claims.

## Claims

1. An automotive display device with a direction alert function, the automotive display device being applied to a driver assistance system and comprising a main body, the main body having a front side provided with a display screen for displaying an image or information in collaboration with the driver assistance system, the automotive display device being **characterized in that**:
the main body further comprises a direction alert module provided around, and along a periphery of, the display screen, the direction alert module is configure to emit alerting light from an area located along the periphery, and in an appropriate direction, of the display screen, the direction alert module comprises a plurality of light-emitting units,
and the light-emitting units are provided around, and arranged at intervals along the periphery of, the display screen,
wherein the driver assistance system is able to identify an approaching object in a vicinity of a vehicle body of a vehicle, the display screen is configured to display an image, or information, of the approaching object in collaboration with the driver assistance system, and the direction alert module is configured to be driven according to a direction of the approaching object with respect to the vehicle body in order for a said light-emitting unit, or said light-emitting units, in a said area located along the periphery, and in a corresponding direction, of the display screen to emit the alerting light.

2. The automotive display device of claim 1, wherein the main body further comprises a circuit substrate and a front housing located on a front side of the circuit substrate, the display screen and the light-emitting units are mounted on the circuit substrate, the front housing is formed with a hollow portion corresponding in position to the display screen and a plurality of hollowed-out guide grooves corresponding in position to the light-emitting units, the hollow portion is configured to accommodate the display screen and allow the display screen to be exposed on the front side of the main body, and the guide grooves are provided around, and arranged at intervals along a periphery of, the hollow portion in order for the alerting light of each said light-emitting unit to be projected forward through a corresponding one of the guide grooves.

3. The automotive display device of claim 2, wherein the main body further comprises a rear housing located on a rear side of the circuit substrate, the rear housing is configured to couple with the front housing, and the rear housing has an inner side provided with a light-reflecting portion corresponding in position to the light-emitting units in order for the alerting light of the light-emitting units to be projected forward in a concentrated manner.

4. The automotive display device of claim 3, wherein the direction alert module further comprises a plurality of light-guiding edge strips provided around, and along the periphery of, the display screen, and the light-guiding edge strips are mounted on the guide grooves of the front housing, cover a side of the guide grooves that is opposite the light-emitting units, and are configured to receive and guide light coming through the guide grooves such that the light forms the alerting light emitted regionally from a said area located along the periphery of the display screen.

5. The automotive display device of claim 4, wherein the direction alert module is provided with at least one said light-guiding edge strip at each of a position above, a position below, a position on a left side of, and a position on a right side of the display screen, and each said light-guiding edge strip corresponds to at least one said guide groove and at least one said light-emitting unit in order to let out the alerting light when the approaching object is in front of, behind, on a left side of, or on a right side of the vehicle body.

6. The automotive display device of claim 5, wherein the light-guiding edge strip at the position above or below the display screen and the corresponding at least one guide groove are arcuate.

7. A driver assistance system with a direction alert function, the driver assistance system being applied to a vehicle and comprising:
the automotive display device of any of claims 1 to 6, wherein the automotive display device is provided to be observed by a driver;
a plurality of photographic units provided on a vehicle body of the vehicle to capture real-scene images of surroundings of the vehicle body; and
a processing unit in electrical-signal connection with the photographic units and the automotive display device separately, wherein the processing unit is configured to receive and process the real-scene images captured by the photographic units, judge according to the processed real-scene images, and control the automotive display device according to a judgement thus made, and the processing unit comprises an image processing module configured for image processing, an object identification module configured to identify an object in an image, an early-warning determination module configured to determine, according to a distance to the identified object, whether or not an early warning should be issued, and a display control module configured to control the display screen according to the early warning to be issued;
wherein when the distance from the vehicle body to the identified object is less than a preset alert distance, the early-warning determination module determines to issue the early warning and therefore drives the automotive display device according to a direction of the identified object with respect to the vehicle body in order for a said light-emitting unit, or said light-emitting units, in a said area located along the periphery,
and in a corresponding direction, of the display screen to emit the alerting light while the early warning is being issued, and the display control module controls the image or
information displayed by the display screen of the automotive display device in such a way that, while the early warning is being issued, the display screen displays a real-scene image containing the identified object at a position corresponding to the direction of the identified object, a partial enlarged real-scene image showing the identified object at a position corresponding to the direction of the identified object, or an electronic icon capable of representing the identified object.

8. The driver assistance system of claim 7, wherein the processing unit further comprises a path prediction module configured to track previous image data of the identified object, infer a prior moving trail of the identified object from the previous image data, and estimate a moving path of the identified object in a predetermined period of time in future according to the prior moving trail, the early-warning determination module is configured to determine, according to the moving path of the identified object, whether or not to issue the early warning, and the early-warning determination module determines to issue the early warning when a distance between the moving path of the identified object and the vehicle body is less than the alert distance.

9. The driver assistance system of claim 8, wherein the image processing module is configured to perform image stitching, projection, and warping conversions on the real-scene images and is capable at least of generating a top-view panoramic image of the vehicle body by the stitching conversion, the object identification module is configured to identify in the real-scene images or the panoramic image of the vehicle body an object in a vicinity of the vehicle body, and the display control module is configured to drive the display screen to display the panoramic image of the vehicle body when no said early warning is issued.

10. The driver assistance system of claim 9, wherein the alert distance is able to be increased or decreased with a vehicle speed of the vehicle, and the predetermined period of time is about 2 seconds.
